# EUROPEAN PATENT APPLICATION

(11) **EP 4 834 966 A1**
(43) Date of publication of application: **04.11.2026**
(21) Application number: 26171210.3
(22) Date of filing: 08.04.2026
(51) Int. Cl.: C08G 18/76, C08G 18/40, C08G 18/48, C08G 18/63, C08G 101/00

(54) **HIGH-REBOUND MOLDED POLYURETHANE FOAM WITH GRADIENT HARDNESS AND METHOD FOR PREPARING SAME**

(30) Priority: 28.04.2025 CN 202510549324
(71) Applicant: Adient US LLC, Plymouth, MI 48170 (US)
(72) Inventor: ZHANG, Xin, Shanghai, 200040 (CN); DENG, Haiou, Shanghai, 200040 (CN); NI, Haifeng, Shanghai, 200040 (CN)
(74) Representative: Liedtke & Partner Patentanwälte

(57) **Abstract**

The present invention discloses a high-rebound molded polyurethane foam with gradient hardness from an upper surface to a lower surface, wherein the high-rebound molded polyurethane foam has uniform density within a thickness from the upper surface to the lower surface, and the high-rebound molded polyurethane foam has a sag factor greater than 3.0, the sag factor being the ratio of 65% compression hardness value to 25% compression hardness value. The present invention also discloses a method for preparing a high-rebound molded polyurethane foam.

## Description

### Technical field

The present application relates to a high-rebound molded polyurethane foam, in particular to a high-rebound molded polyurethane foam with gradient hardness.

### Background Art

In a conventional high-rebound molded polyurethane foam, hardness is uniform from top to bottom. To improve comfort, one or more layers of soft high-rebound molded polyurethane foam are generally bonded to an upper surface. This means that more material and manpower costs are required.

Furthermore, in the prior art, gradient hardness of high-rebound molded polyurethane foam can be achieved through a difference in density between upper and lower regions, for example, (pages 1 - 5 of the Description) mentioned in patent document US20240109467A1.

### Summary of the Invention

To solve the above problem, the present application provides a high-rebound molded polyurethane foam with gradient hardness and uniform density.

A first aspect of the present application provides a high-rebound molded polyurethane foam with gradient hardness from an upper surface to a lower surface, wherein the high-rebound molded polyurethane foam has uniform density within a thickness from the upper surface to the lower surface, and the high-rebound molded polyurethane foam has a sag factor greater than 3.0, the sag factor being the ratio of 65% compression hardness value to 25% compression hardness value.

Another aspect of the present application provides a method for preparing the high-rebound molded polyurethane foam with gradient hardness described above.

Unlike the prior art, the high-rebound molded polyurethane foam provided in the present application is an integral whole having continuous hardness variation, with low hardness at the top and high hardness at the bottom, and also has uniform density within the range of thickness from the top to the bottom. Unexpectedly, the high-rebound molded polyurethane foam of the present application has a high sag factor, and thus offers excellent comfort. The gradient hardness of the high-rebound molded polyurethane foam of the present application is achieved by improving the pore structure of the high-rebound molded polyurethane foam; this is different from gradient hardness provided by changing density. The present invention not only ensures that the high-rebound molded polyurethane foam is integrally formed, considerably reducing process complexity and labour costs, but also retains the characteristic of the high-rebound molded polyurethane foam in having uniform density from top to bottom. This means that there is no significant difference in physical performance between different positions, so the service life of the high-rebound molded polyurethane foam can be increased.

### Brief Description of the Drawings

Embodiments of the present invention will now be described through examples with reference to the drawings.
- Figure 1: shows a structural schematic drawing of the high-rebound molded polyurethane foam according to embodiments of the present application,
- Figure 2A: shows scanning electron microscope (SEM) result pictures of foam of formulation 1 according to the present application,
- Figure 2B: shows scanning electron microscope (SEM) result pictures of a standard reference foam, and
- Figure 3: shows a schematic drawing of a hardness test according to embodiments of the present application.

### Particular Embodiments

A first aspect of the present application provides a high-rebound molded polyurethane foam with gradient hardness from an upper surface to a lower surface, wherein the high-rebound molded polyurethane foam has uniform density within a thickness from the upper surface to the lower surface, and the high-rebound molded polyurethane foam has a sag factor greater than 3.0, the sag factor being the ratio of 65% compression hardness value to 25% compression hardness value.

The term "high-rebound" means that the foam has a ball rebound ratio ≥ 60%. The ball rebound ratio is tested according to standard GBT-6670-2008.

Sag factor (SF): Ratio of 65% compression hardness value (ILD65) to 25% compression hardness value (ILD25) in a hardness test (GB/T 10807) of the high-rebound molded polyurethane foam: $Sag Factor = \frac{ILD 65}{ILD 25}$

The sag factor can reflect the supported load of the high-rebound molded polyurethane foam. It is generally considered that an SF greater than 2.8 means an average comfort requirement, while an SF greater than 3.0 means excellent comfort performance. In some embodiments, the foam of the present invention may have an SF value of up to 3.2, even 3.3.

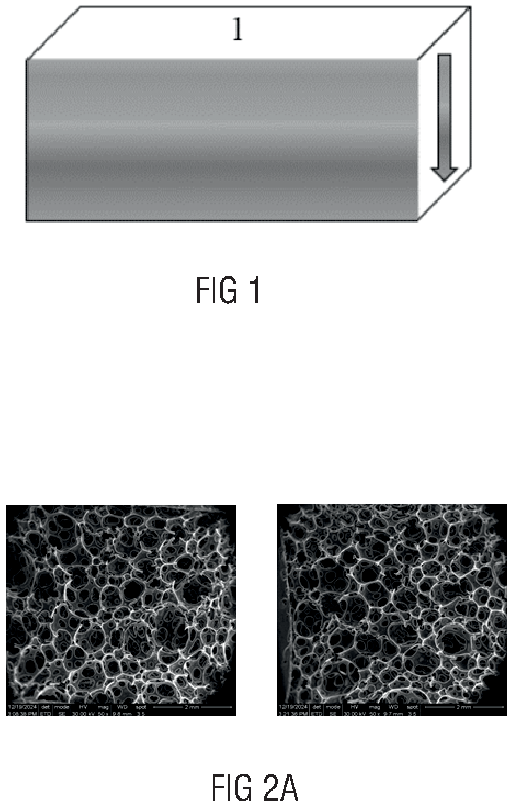

As shown in Fig. 1, the high-rebound molded polyurethane foam of the present application has an upper surface 1 and a lower surface 2, and has continuously increasing hardness in a direction from the upper surface to the lower surface. For example, the hardness at the top of the high-rebound molded polyurethane foam is lower than the hardness at the bottom thereof (hardness: position 1 < position 2 < position 3 < position 4), but the density within the overall thickness range shows essentially no variation. In embodiments, position 1 is located at approximately 1/5 of the total thickness of the high-rebound molded polyurethane foam in the direction from the upper surface to the lower surface. Position 2 is located at approximately 2/5 of the total thickness of the high-rebound molded polyurethane foam in the direction from the upper surface to the lower surface. Position 3 is located at approximately 3/5 of the total thickness of the high-rebound molded polyurethane foam in the direction from the upper surface to the lower surface. Position 4 is located at approximately 4/5 of the total thickness of the high-rebound molded polyurethane foam in the direction from the upper surface to the lower surface.

In some embodiments, the high-rebound molded polyurethane foam is prepared from a formulation comprising modified diphenylmethane diisocyanate (modified MDI) and a white material component. The white material component comprises a polyol with a molecular weight of 4000 - 7000 MW and an associated aid. Specifically, the high-rebound molded polyurethane foam is prepared from modified MDI with an NCO value of 10 - 33.6 and a polyol with a molecular weight of 4000 - 7000 MW. A polyol with low molecular weight and high functionality, and a polyol with high molecular weight and low functionality are preferred, to increase the difference in reactivity between the different polyols. In some embodiments, the ratio of modified MDI to white material in the formulation is 45 - 60 : 100 (weight percentage), and the amount of modified MDI used can be adjusted in real time according to product requirements. For example, the ratio of modified MDI to white material may be 45 : 100, 50 : 100, 55 : 100, etc.

In some embodiments, the white material component comprises a catalyst, a chain extender, a silicone oil and a cell-opening agent and water, or the white material consists of a catalyst, a chain extender, a silicone oil and a cell-opening agent and water.

In some embodiments, the polyol is a mixture of polyether polyols.

In some embodiments, the mixture of polyether polyols comprises two or more different conventional polyether polyols selected from Dongda DEP-5631D, DEP-3500D, EP-330N and EP-3600 and Wanhua F3128, F3135, F3156 and F3170A. For example, the mixture of polyether polyols may comprise any one of the following combinations: DEP-5631D and F3128; EP-330N and F3156; DEP-5631D and EP-330N; DEP-3500D and EP-3600; DEP-5631D, F3170A and EP-330N; DEP-3500D, EP-330N and F3156; DEP-5631D, F3135 and EP-3600; F3128, EP-3500D and F3170A, etc. It was unexpectedly discovered in the present application that the use of the mixture of polyether polyols mentioned above can effectively improve a hardness characteristic of the high-rebound molded polyurethane foam, thereby achieving a favorable sag factor (greater than 3.0).

In some embodiments, the mixture of polyether polyols may further comprise a grafted polyether polyol, such as Wanhua Chemical F2140.

In some embodiments, the formulation used to prepare the high-rebound molded polyurethane foam comprises a mixture of polyether polyols, the mixture of polyether polyols comprising a conventional polyether polyol and a grafted polyether polyol, or consisting of a conventional polyether polyol and a grafted polyether polyol. The formulation used to prepare the high-rebound molded polyurethane foam may comprise 50 wt% - 85 wt% of a conventional polyether polyol and 1 wt% - 50 wt% of a grafted polyether polyol. For example, the formulation may comprise 50 wt%, 52 wt%, 55 wt%, 60 wt%, 62 wt%, 70 wt%, 72 wt%, 80 wt%, 82 wt% or 85 wt% of a conventional polyether polyol. The formulation may further comprise 1 wt%, 5 wt%, 10 wt%, 15 wt%, 20 wt%, 30 wt%, 40 wt% or 50 wt% of a grafted polyether polyol.

Since the polyether polyols have different molecular weights and ethylene oxide (EO) contents, they differ in their reactivity with modified MDI, and the size of the foam formed by reaction is different at the upper and lower surfaces, with the cells at the lower surface being more regular. A polyether with high reactivity such as DEP-5631D will preferentially react with the modified MDI and be at the bottom (the lower surface) of the high-rebound molded polyurethane foam, while a polyether with low molecular weight and high functionality will provide higher strength to the high-rebound molded polyurethane foam. As the high-rebound molded polyurethane foam continuously rises and expands, a polyether with low reactivity such as EP-3600 will gradually be deposited in the reaction at the top. However, this is not the absolute sequence; it is merely the case that a polyether with high reactivity that preferentially reacts with the modified MDI is present in a higher proportion. Therefore, it is believed that when the reaction of the high-rebound molded polyurethane foam is complete, the overall density of the high-rebound molded polyurethane foam will not vary. This is attributed to the double effect of the molecular weight of the polyether and the cross-linked density of the high-rebound molded polyurethane foam. However, the structure of the high-rebound molded polyurethane foam varies from top to bottom; in terms of macroscopic structure, the high-rebound molded polyurethane foam has a hardness gradient. Thus, the comfort curve high-rebound molded polyurethane foam provided in the present application exhibits gradient hardness and a high sag factor.

In some embodiments, the upper surface and lower surface of the high-rebound molded polyurethane foam according to the present invention have large cells and small cells respectively, wherein the diameter of large cells at the upper surface is greater than the diameter of large cells at the lower surface, and small cells of both have substantially the same diameter. For example, the diameter of large cells at the upper surface is 2.7 mm - 3.0 mm, and the diameter of large cells at the lower surface is 1.5 mm - 2.4 mm; small cells have a diameter less than 0.9 mm, e.g. a diameter of 0.5 mm - 0.8 mm.

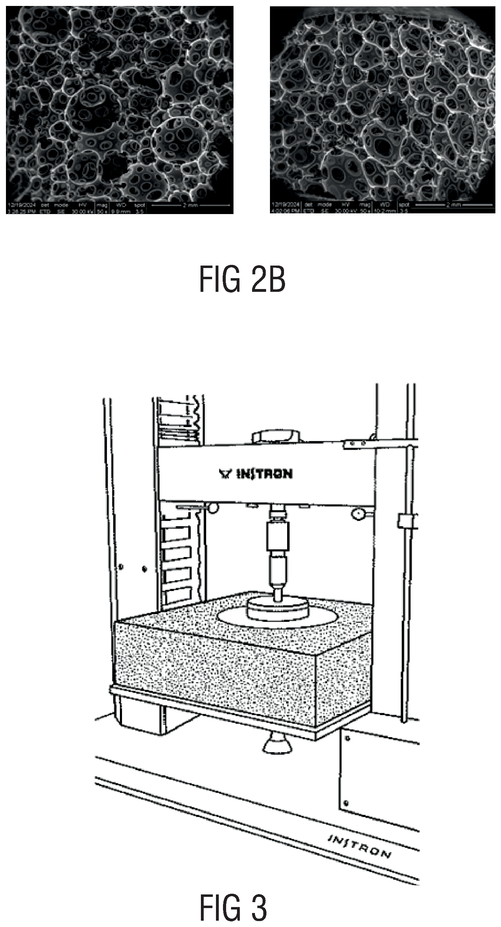

As shown in Fig. 2A, the shape of cells at the upper surface (the left picture) of foam of a formulation 1 according to the present invention is mostly round, wherein the diameter of small cells is 0.54 - 0.81 mm, and the diameter of large cells is 2.70 - 2.97 mm; the shape of cells at the lower surface (the right picture) of foam of a formulation 1 according to the present invention is mostly regular hexagonal (regular crystal orientation), wherein the diameter of small cells is 0.54 mm - 0.81 mm, and the diameter of large cells is 1.89 mm - 2.43 mm. In comparison, there is no obvious difference in the diameter of cells between the upper and lower surfaces of a conventional foam in the prior art. As shown in Fig. 2B, the shape of cells at the upper surface (the left picture) of a standard reference molded polyurethane foam is purely round, wherein the diameter of small cells is 1.08 mm - 1.62 mm, and the diameter of large cells is 2.43 mm - 3.51 mm; the shape of cells at the lower surface (the right picture) of a standard reference molded polyurethane foam is mostly round, and locally regular hexagonal, wherein the diameter of small cells is 1.08 mm - 1.62 mm, and the diameter of large cells is 2.43 mm - 3.78 mm.

In some embodiments, the high-rebound molded polyurethane foam according to the present invention has a density of 70 kg/m³ - 80 kg/m³ as measured according to GB/T 6343. For example, the foam according to the present invention may have a density of 75 kg/m³ within the range of its thickness.

Another aspect of the present application provides a method for preparing the high-rebound molded polyurethane foam with gradient hardness described above.

In some embodiments, the method for preparing the high-rebound molded polyurethane foam may use 0.1 wt% - 3 wt% of a catalyst. For example, it may use 0.5 wt%, 1 wt%, 1.5 wt%, 2 wt% or 2.5 wt% of a catalyst.

In some embodiments, the method for preparing the high-rebound molded polyurethane foam may use 0.1 wt% - 3 wt% of a chain extender. For example, it may use 0.5 wt%, 1 wt%, 1.5 wt%, 2 wt% or 2.5 wt% of a chain extender.

In some embodiments, the method for preparing the high-rebound molded polyurethane foam may use 0.1 wt% - 3 wt% of a silicone oil. For example, it may use 0.5 wt%, 1 wt%, 1.5 wt%, 2 wt% or 2.5 wt% of a silicone oil.

In some embodiments, the method for preparing the high-rebound molded polyurethane foam may use 0.5 wt% - 5 wt% of water. For example, it may use 0.5 wt%, 1 wt%, 1.5 wt%, 2 wt%, 2.5 wt%, 3 wt%, 3.5 wt%, 4 wt% or 4.5 wt% of water.

In some embodiments, the method for preparing the high-rebound molded polyurethane foam uses 0.1 wt% - 5 wt% of a cell-opening agent. For example, it may use 0.5 wt%, 1 wt%, 1.5 wt%, 2 wt%, 2.5 wt%, 3 wt%, 3.5 wt%, 4 wt% or 4.5 wt% of a cell-opening agent.

In some embodiments, the method for preparing the high-rebound molded polyurethane foam comprises the following steps:
1) mixing a white material component and stirring (e.g. at 1000 r/min - 2000 r/min) for 5 min - 10 min;
2) leaving the white material to stand (e.g. for 10 min - 30 min) to eliminate mechanical bubbles caused by mechanical stirring;
3) heating a foam mold (e.g. to 50 °C - 70°C) and applying a mold release agent;
4) quickly pouring a suitable amount of modified MDI into a container containing the white material, stirring (e.g. mechanically at 1000 r/min - 5000 r/min for 5 s - 20 s), then quickly pouring the mixture into the mold, closing the mold and reacting for a period of time (e.g. 3 min - 6 min);
5) when the reaction is complete, cell opening is completed as quickly as possible to obtain a finished product.

### Example 1

This Example uses the materials in Table 1 below to prepare a high-rebound molded polyurethane foam:

**Table 1: Polyol - white material**

| Starting material | Usage amount / wt% |
|---|---|
| Polyether polyol | 50% - 85% |
| Grafted polyether polyol | 1% - 50% |
| Catalyst | 0.1% - 3% |
| Chain extender | 0.1% - 3% |
| Silicone oil | 0.1% - 5% |
| Water | 0.5% - 5% |
| Cell-opening agent | 0.1% - 5% |
| Modified MDI | 45% - 60% of total weight of white material |

Exemplary description of product preparation process:
1) Preferentially in accordance with the usage amounts in Table 1, the various starting materials are accurately weighed into a beaker, to give 1000 g of white material in total;
2) the white material is mechanically stirred evenly at 1000 r/min - 2000 r/min for 5 min - 10 min;
3) the white material is left to stand for 10 min - 30 min to eliminate mechanical bubbles caused by the mechanical stirring;
4) a conventional foam mold is chosen; as an example for experiment, a 400*400*100 mm square mold is used, heated to 50°C - 70°C, and coated with a mold release agent;
5) 500 g of modified MDI is weighed out, and quickly poured into the beaker containing the white material; after mechanically stirring at 1000 r/min - 5000 r/min for 5 s - 20 s, the mixed material is quickly poured into the mold, the mold is closed and a reaction is carried out for 3 min - 6 min;
6) when the reaction is complete, the mold is opened and a high-rebound molded polyurethane foam is taken out, and cell opening is completed as quickly as possible to obtain a finished product.

**Table 2: Usage amounts of starting materials of different formulations according to the present invention**

| Starting material | Formulation 1 / wt% | Formulation 2 / wt% | Formulation 3 / wt% |
|---|---|---|---|
| Conventional polyether polyol mixture | 62% | 72% | 52% |
| Grafted polyether polyol | 30% | 20% | 40% |
| Catalyst | 0.65% | 0.65% | 0.65% |
| Chain extender | 1.15% | 1.15% | 1.15% |
| Silicone oil | 0.7% | 0.7% | 0.7% |
| Water | 2.5% | 2.5% | 2.5% |
| Cell-opening agent | 3% | 3% | 3% |
| Modified MDI | 50% | 40% | 45% |

The standard reference is a conventional molded polyurethane foam, which lacks the gradient hardness of the high-rebound molded polyurethane foam according to the present invention. The specific starting materials and usage amounts are as follows:

**Table 3: Usage amounts of starting materials of standard reference molded polyurethane foam**

| Starting material | Standard reference / wt% |
|---|---|
| Conventional polyether polyol | 62% |
| Grafted polyether polyol | 30% |
| Catalyst | 0.65% |
| Chain extender | 1.15% |
| Silicone oil | 0.7% |
| Water | 2.5% |
| Cell-opening agent | 3% |
| MDI | 50% |

The polyether polyol used in the standard reference molded polyurethane foam is EP-330N; it does not comprise any other polyether polyol, and uses MDI. The other materials do not differ significantly from the materials used in the high-rebound molded polyurethane foam of the present invention.

The high-rebound molded polyurethane foam (400*400*100 mm square foam of thickness 100 mm) prepared using the above materials and method was subjected to performance testing, and the results are shown in Table 4 below:

**Table 4**

| Performance | Standard reference | Formulation 1 | Formulation 2 | Formulation 3 | Notes |
|---|---|---|---|---|---|
| SF = 65%/25% | **2.77** | **3.30** | **3.02** | **3.20** | Density: 70 kg/m³ |
| Hysteresis loss | 21.04 | 20.46 | 23.87 | 33.54 | GB/T 6343 |
| 25% ILD | 312.59 | 321.6 | 304.29 | 249.54 | |
| 40% ILD | 440.01 | 489.95 | 439.56 | 365.81 | |
| 65% ILD | 865.22 | 1059.86 | 920.14 | 799.47 | |
| Hardness at point 1 | 12.4 | 13.5 | 14.5 | 14.8 | Expressed as push pull force Points 1 to 4 are located at 20, 40, 60 and 80 mm respectively |
| Hardness at point 2 | 14.2 | 15.6 | 17.5 | 18.5 | |
| Hardness at point 3 | 14.6 | 15.8 | 17.8 | 21.1 | |
| Hardness at point 4 | 14.2 | 16 | 18.1 | 21.8 | |

Hysteresis loss was measured according to the method of GB/T 33609.

Compression hardnesses 25% ILD, 40% ILD and 65% ILD were measured according to the method of GB/T 10807.

Density was measured according to the method of GB/T 6343.

### Example 2

In this Example, a real product of a production line was tested. Specifically, foam for a seat was subjected to performance testing, wherein the foam thickness of a test region was 50 mm. Indentation hardness and density were measured by the same method as in Example 1.

The only difference between the standard reference and the seat foam was as follows: The standard reference was the standard reference foam according to Table 3, using a conventional polyether polyether polyol; the foams used in seat foams 1 - 4 were prepared from the materials specified according to Table 1, and conventional polyether polyol mixtures were used therein. The test results are shown in Table 5.

**Table 5:**

| Performance | Standard reference | Seat foam 1 | Seat foam 2 | Seat foam 3 | Seat foam 4 | Notes |
|---|---|---|---|---|---|---|
| SF = 65%/25% | 2.455 | 3.119 | 3.050 | 3.603 | 3.397 | GB/T 6343 |
| 25% ILD | 123.992 | 86.597 | 122.872 | 113.923 | 148.132 | |
| 40% ILD | 166.53 | 128.72 | 182.06 | 175.39 | 224.03 | |
| 65% ILD | 304.44 | 270.09 | 374.75 | 410.53 | 503.14 | |
| Density (kg/m³) | 80 | 80 | 80 | 75 | 75 | |

It can be seen from Table 5 that the seat foams according to the present invention have 40% hardness values of 120 - 240 N, and the products according to the present invention can all achieve SF > 3.

Although the present invention has been described in relative detail with reference to certain Examples and modes of implementation thereof, other modes of implementtation are also possible. Thus, the scope of the present invention should not be limited to the specific Examples and modes of implementation thereof included therein.

## Claims

1. A high-rebound molded polyurethane foam with gradient hardness from an upper surface to a lower surface, wherein the high-rebound molded polyurethane foam has uniform density within a thickness from the upper surface to the lower surface, and the high-rebound molded polyurethane foam has a sag factor greater than 3.0, the sag factor being the ratio of 65% compression hardness value to 25% compression hardness value.

2. The high-rebound molded polyurethane foam as claimed in claim 1, wherein the high-rebound molded polyurethane foam is prepared from a formulation comprising modified diphenylmethane diisocyanate and a white material component, the white material comprising a polyol with a molecular weight of 4000 MW - 7000 MW and an aid.

3. The high-rebound molded polyurethane foam as claimed in claim 2, wherein the ratio of the modified diphenylmethane diisocyanate to the white material component in the formulation is 45wt%-60wt% : 100wt%.

4. The high-rebound molded polyurethane foam as claimed in claim 2 or 3, wherein the polyol is a mixture of polyether polyols.

5. The high-rebound molded polyurethane foam as claimed in claim 4, wherein the mixture comprises two or more different conventional polyether polyols selected from Dongda DEP-5631D, DEP-3500D, EP-330N and EP-3600 and Wanhua F3128, F3135, F3156 and F3170A.

6. The high-rebound molded polyurethane foam as claimed in claim 4 or 5, wherein the mixture further comprises a grafted polyether polyol.

7. The high-rebound molded polyurethane foam as claimed in any one of the preceding claims 2 to 6, wherein the formulation comprises 50 wt% - 85 wt% of a conventional polyether polyol and 1 wt% - 50 wt% of a grafted polyether polyol.

8. The high-rebound molded polyurethane foam as claimed in any one of the preceding claims 2 to 7, wherein the aid comprises a catalyst, a chain extender, a silicone oil, a cell-opening agent and water.

9. A method for preparing the high-rebound molded polyurethane foam with gradient hardness from an upper surface to a lower surface according to any one of claims 1 to 8.

10. Method according to claim 9, wherein the following materials are also used in the preparation of the high-rebound molded polyurethane foam:
- 0.1 wt% - 3 wt% of a catalyst;
- 0.1 wt% - 3 wt% of a chain extender;
- 0.1 wt% - 3 wt% of a silicone oil;
- 0.5 wt% - 5 wt% of water; and
- 0.1 wt% - 5 wt% of a cell-opening agent.
